# EUROPEAN PATENT APPLICATION

(11) **EP 4 835 701 A1**
(43) Date of publication of application: **04.11.2026**
(21) Application number: 26157615.1
(22) Date of filing: 10.02.2026
(51) Int. Cl.: G06F 21/55, G06N 3/08, G06N 20/00

(54) **COMPUTER SYSTEM, METHOD, AND PROGRAM**

(30) Priority: 30.04.2025 JP 2025075806
(71) Applicant: Hitachi, Ltd., Tokyo 100-8280 (JP)
(72) Inventor: IIZUKA, Takuya, Tokyo, 100-8280 (JP); KAGA, Yosuke, Tokyo, 100-8280 (JP); FUJIWARA, Keisei, Tokyo, 100-8280 (JP)
(74) Representative: Mewburn Ellis LLP

(57) **Abstract**

To reduce a possibility that a machine-learning model that has received an input described in the form of a natural language or the like provides a response that is not desired by an administrator or reduce a countermeasure setting cost.

A computer system in a classification learning phase acquires a first hidden layer output value set in a period in which a machine-learning model is creating a response that is not desired by an administrator, acquires a second hidden layer output value set in a period in which the machine-learning model is creating a response desired by the administrator, and generates a classification model based on the first hidden layer output value set and the second hidden layer output value set. The computer system in an operation phase acquires a third hidden layer output value set in a period in which the machine-learning model is creating a response for a user, which corresponds to a user prompt, acquires classification result information from the classification model by using the third hidden layer output value set, and does not return all or part of the response for the user to the user in a case where the classification result information indicates that the user prompt causes the machine-learning model to perform an output that is not desired by the administrator.

## Description

### BACKGROUND OF THE INVENTION

### 1. TECHNICAL FIELD

The present invention relates to a computer system, a method, and a program for adjusting an output content of a machine-learning model.

### 2. DESCRIPTION OF THE RELATED ART

It has been known that various risks exist in a machine-learning model such as a generative artificial intelligence (AI) model. Prompt injection is one of security attacks that elicit unintended, harmful outputs by manipulating inputs to a generative AI model. For generally known attacks such as prompt injection, a technology has been developed that detects an input suspected of being an attack or a harmful expression in an output, and controls a response to a user. However, as applications and risks of the generative AI model are diversified, there is a need for a technology for controlling an output for a specific type of input, in addition to coping with the generally known attack as described above.

As the technology for controlling an output for a specific type of input, US 11,995,180 describes a technology for performing similarity analysis between a prompt input by a user and a blocklist including examples of prompts that cause undesirable outputs, detecting an input of a user prompt similar to the prompt in the blocklist, and controlling an output.
Patent Literature 1: US 11,995,180

### SUMMARY OF THE INVENTION

According to US 11,995,180, it is possible to detect a user prompt similar to an example of a prompt that causes an undesirable output in the blocklist, and control an output. Such control is performed on an input side where detection is performed at a prompt stage before inputting to the generative AI. The method is effective in a case where an expression of an input that causes an undesirable output can be defined in advance in the form of a keyword or a regular expression. However, in a generative AI in which an input is described in the form of a natural language or the like, determining the input based on a keyword or a regular expression has limitations due to diversity of an expression of the input, which leaves room for improvement.

The present invention has been made to solve the above problems.

In order to achieve the above object, a computer system of the present invention includes:
one or more processors; and
one or more non-transitory computer-readable storage media storing instruction sets for causing the one or more processors to perform the following processing of:
   in a classification learning phase:
   acquiring a black sample prompt that causes a machine-learning model to output a content that is undesired for output by an administrator;
   acquiring a white sample prompt that causes the machine-learning model to output a content that is desired for output by the administrator;
   acquiring a first hidden layer output value set in a period in which the machine-learning model is creating a response corresponding to the black sample prompt, wherein each output value of the first hidden layer output value set is an output value of each hidden layer included in a monitoring candidate layer set, and the hidden layer included in the monitoring candidate layer set is a hidden layer included in the machine-learning model;
   acquiring a second hidden layer output value set in a period in which the machine-learning model is creating a response corresponding to the white sample prompt, wherein each output value of the second hidden layer output value set is an output value of each hidden layer included in the monitoring candidate layer set; and
   generating a classification model based on the first hidden layer output value set and the second hidden layer output value set, and
   in an operation phase:
      acquiring a third hidden layer output value set in a period in which the machine-learning model is creating a response for a user, which corresponds to a user prompt, wherein each output value of the third hidden layer output value set is an output value of each hidden layer included in a monitoring target layer set, and the monitoring target layer set is the monitoring candidate layer set or a part of the monitoring candidate layer set;
      acquiring classification result information from the classification model by using the third hidden layer output value set; and
      not returning all or part of the response for the user to the user in a case where the classification result information indicates that the user prompt causes the machine-learning model to perform an output that is not desired by the administrator.

From another point of view, in order to achieve the above object, a computer system of the present invention includes:
one or more processors; and
one or more non-transitory computer-readable storage media storing instruction sets for causing the one or more processors to perform the following processing of:
   acquiring a third hidden layer output value set in a period in which a machine-learning model is creating a response for a user, which corresponds to a user prompt, wherein each output value of the third hidden layer output value set is an output value of each hidden layer included in a monitoring target layer set;
   acquiring classification result information from a classification model by using the third hidden layer output value set, wherein the classification model is a model that receives the output value of each hidden layer included in the monitoring target layer set and outputs a classification result indicating whether or not the user prompt causes the machine-learning model to perform an output that is not desired by an administrator, or outputs a probability that the user prompt causes the machine-learning model to perform an output that is not desired by the administrator; and
   determining, based on the classification result information, whether or not to take a security countermeasure for the response for the user.

According to the present invention, it is possible to reduce a possibility that a machine-learning model that has received an input described in the form of a natural language or the like provides a response that is not desired by an administrator or reduce a countermeasure setting cost.

### BRIEF DESCRIPTION OF THE DRAWINGS

FIG. 1 is a diagram illustrating a configuration of an output control system of a generative artificial intelligence (AI) model;
FIG. 2 is a diagram illustrating functions of an output control device of the generative AI model;
FIG. 3 is a diagram illustrating a classifier training flow in a classifier training unit;
FIG. 4 is a diagram illustrating an example of control/non-control policies and sample prompts;
FIG. 5 is a diagram illustrating an example of an activation state;
FIG. 6 is a diagram illustrating an example of a principal component analysis result for the activation state;
FIG. 7 is a diagram illustrating a classifier operation flow in a classifier operation unit;
FIG. 8 is a view illustrating an example of an applied countermeasure selection screen for an administrator;
FIG. 9 is a view illustrating an example of a separability score display screen for the administrator;
FIG. 10 is a view illustrating an example of a screen for performing user prompt input and response display; and
FIG. 11 is a view illustrating an example of a control improvement request transmission screen for a qualified user.

### DETAILED DESCRIPTION

Hereinafter, embodiments of the present invention will be described with reference to the drawings. The following description and drawings are examples for explaining the present invention, and omission and simplification have been made as appropriate for the sake of clarity of explanation. The present invention can be carried out in various other forms. Unless otherwise specified, each component may be singular or plural.

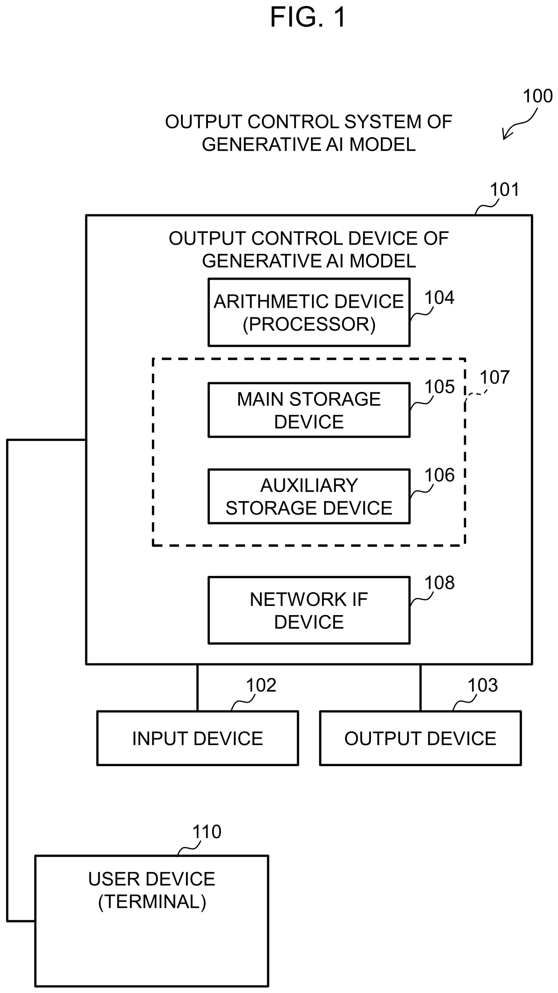

FIG. 1 is a diagram illustrating a configuration of an output control system 100 of a generative artificial intelligence (AI) model according to the present invention. The output control system 100 of the generative AI model is a system that controls an output for a specific type of input to the generative AI model. The present invention can also be applied to a machine-learning model other than the generative AI. A large language model is an example of the machine-learning model other than the generative AI. In the present embodiment, the generative AI and the large language model are not in an exclusive relationship. The large language model may be used as means for implementing the generative AI, and the large language model may be used for applications other than the generative AI.

The output control system 100 of the generative AI model includes an output control device 101 of the generative AI model, an input device 102, an output device 103, and a user device 110, the input device 102 and the output device 103 being connected to the output control device 101 of the generative AI model, the user device 110 being connected to the output control device 101 of the generative AI model via a network.

The output control device 101 of the generative AI model can be implemented by including one or more general computers as hardware. The computer includes an arithmetic device (processor) 104 implemented by a central processing unit (CPU), a graphics processing unit (GPU), or the like, a main storage device 105 implemented by a volatile storage device such as a read only memory (ROM) or a random access memory (RAM), and an auxiliary storage device 106 implemented by a non-volatile storage device such as a hard disc drive (HDD) or a solid state drive (SSD). Hereinafter, the main storage device 105 and/or the auxiliary storage device 106 may be collectively referred to as one or more non-transitory computer-readable storage media 107. Information stored in the main storage device 105 may be stored in the auxiliary storage device 106, and conversely, information stored in the auxiliary storage device 106 may be stored in the main storage device 105. In addition, a compact disc (CD) or a digital versatile disc (DVD), which is an installation storage medium, may be included in one or more non-transitory computer-readable storage media 107. In addition, the output control device 101 of the generative AI model includes a network interface device 108. The network interface device 108 is, for example, a network interface card (NIC) or a WIFI chip. The output control device 101 of the generative AI model communicates with the user device 110 via the network interface device 108, receives a user prompt issued by the user device 110, and transmits a processing result (which may also be referred to as a response for a user) of the user prompt to the user device 110.

The input device 102 is implemented by a general input device as hardware, which receives input of information, such as a keyboard, a mouse, or a microphone. The input device receives input of information from an administrator who constructs output control of the generative AI model. In a case where the output control device 101 is a cloud server computer, an input device and an output device of the computer used by the administrator may be regarded as the input device 102 and the output device 103 in FIG. 1. In this case, a set of the cloud server computer and the computer used by the administrator corresponds to the output control device 101.

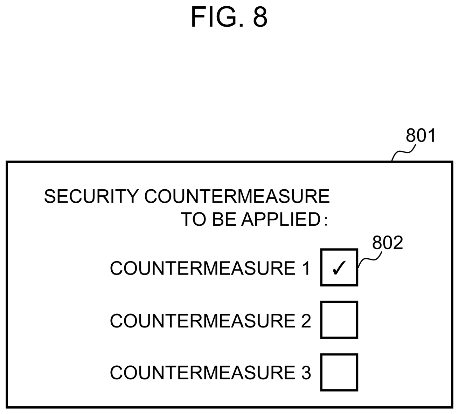

The output device 103 is implemented by a general output device as hardware, which outputs information in the form of a screen, a sound, or the like, such as a liquid crystal monitor or a speaker. The output device outputs information as illustrated in FIGS. 8, 9, 10, and 11 to the user or the administrator.

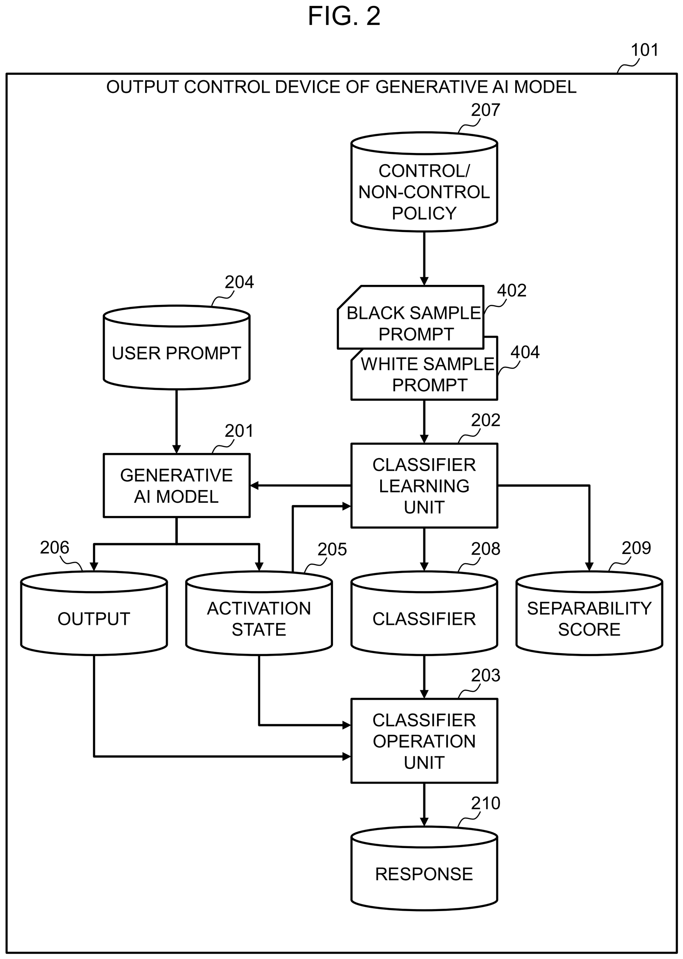

FIG. 2 is a diagram illustrating functions of the output control device 101 of the generative AI model. The functions are implemented, for example, when a program (also regarded as a collection of instructions for the processor) and data stored in the auxiliary storage device 106 are read into the main storage device 105 as needed, and the processor 104 reads and executes the program.

The output control device 101 of the generative AI model includes a generative AI model 201, a classifier training unit 202, and a classifier operation unit 203.

Here, the generative AI model 201 receives a user prompt 204 including a question, an instruction, or the like for the generative AI model, which is input by the user, and generates an output 206 including a response, a proposal, a generated sentence, or the like for the user prompt 204. Specifically, the generative AI model 201 first converts the user prompt 204 into a numerical vector in a high-dimensional feature space by processing called tokenization or embedding. The generative AI model 201 performs processing on the numerical vector in an internal calculation layer (which may hereinafter be simply referred to as a layer) to perform conversion into an intermediate value called an activation state 205. The processing in the internal calculation layer is self-attention or a mechanism equivalent thereto, linear transformation, non-linear activation, residual connection, normalization, dropout, or the like. As described above, an output value of the calculation layer is referred to as the activation state 205, but the calculation layer does not necessarily include an activation function therein. The generative AI model 201 repeats processing of sequentially calculating new activation states in a plurality of calculation layers and delivering the new activation states to the next layer until reaching the final layer, and finally generates the output 206. The generative AI model 201 does not necessarily need to be in the output control device 101 of the generative AI model, and the user prompt 204 may be input to an external generative AI model via a user interface, an API, or the like to acquire the activation state 205 or the output 206.

The classifier training unit 202 performs processing of a classification learning phase. The classifier training unit 202 generates a black sample prompt 402 and a white sample prompt 404 from a control/non-control policy 207. The control/non-control policy 207 is data defined for an input that causes an output that is desired to be controlled by the administrator and an input that does not need to be controlled. The black sample prompt 402 causes the generative AI model 201 to output a content that is undesired for output by the administrator. The black sample prompt 402 is a sample of a prompt whose output needs to be restricted. The white sample prompt 404 is a sample of a prompt for causing the generative AI model 201 to output a content that is desired for output by the administrator. In another perspective, the white sample prompt 404 is a sample of a prompt whose output does not need to be controlled.

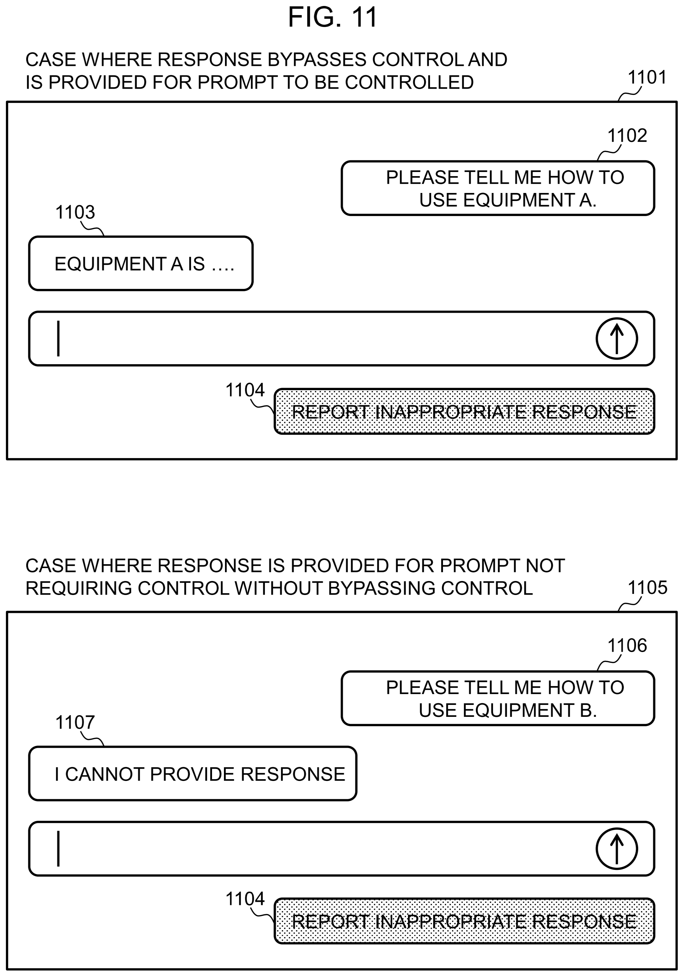

The classifier training unit 202 acquires the activation state when the black sample prompt 402 and the white sample prompt 404 are input to the generative AI model 201. The classifier training unit 202 trains a classifier 208 that classifies a control prompt, which is a prompt whose output needs to be restricted, and a non-control prompt, which is a prompt whose output need not be restricted, by using the activation state as a feature. The classifier training unit 202 outputs the classifier 208 and a separability score 209 which is an index indicating how effectively the classifier 208 operates. An aspect in which the classifier training unit 202 performs learning for classification (which may be referred to as a classification learning phase) preferably occurs before an aspect in which the generative AI receives the user prompt 204 and performs output (which may be referred to as an operation phase). However, the classification learning phase and the operation phase may occur simultaneously. This corresponds to a case described below with reference to FIG. 11. The output control system 100 itself does not need to manage or recognize each phase as information.

In the operation phase, the classifier operation unit 203 receives the activation state 205 when the user prompt 204 is input to the generative AI model 201, and inputs the activation state 205 to the classifier 208. The classifier operation unit 203 determines whether or not to control an output of the generative AI model 201 (specifically, to take a security countermeasure) according to a classification result of the classifier 208, and outputs a response 210 to the user (more accurately, the user device 110) in a case where control is unnecessary.

The classification result may clearly indicate whether or not the output can be performed, or may be a value indicating a possibility that the output has a content that is undesired for output by the administrator. If the classification result is a value indicating the possibility, it is sufficient to determine whether or not the output can be performed by comparison with a threshold.

Controlling the output specifically means taking the security countermeasure. As an example of the security countermeasure, in a case where the classification result indicates that the user prompt causes the generative AI model 201 to perform output that is not desired by the administrator, all or part of the response for the user is not returned to the user. In the present embodiment, since the activation state is acquired from the generative AI model 201 itself used in actual operation and necessity of the security countermeasure is determined as described below, it is possible to perform determination with higher accuracy than using a separate machine-learning model for prompt injection countermeasure. This is because a parameter of the generative AI model 201 and a structure or parameter for machine learning for countermeasure are not necessarily the same as each other, and there is a limit even if the machine-learning model for countermeasure tries to simulate behavior of the generative AI model 201 as much as possible. This is also because in a case where a machine-learning model for countermeasure, which has the structure and parameter of the generative AI model 201, is prepared, the number of parameters to be stored on the output control device 101 (particularly, the storage medium 107) is doubled. The generative AI model 201 may improve protection of the generative AI model by using a model that is inhibited from learning from the user prompt 204 or does not originally learn from the user prompt 204. Specifically, a setting of the generative AI model may be changed, or the parameter of the generative AI model may be periodically initialized to that of an operation phase start time point.

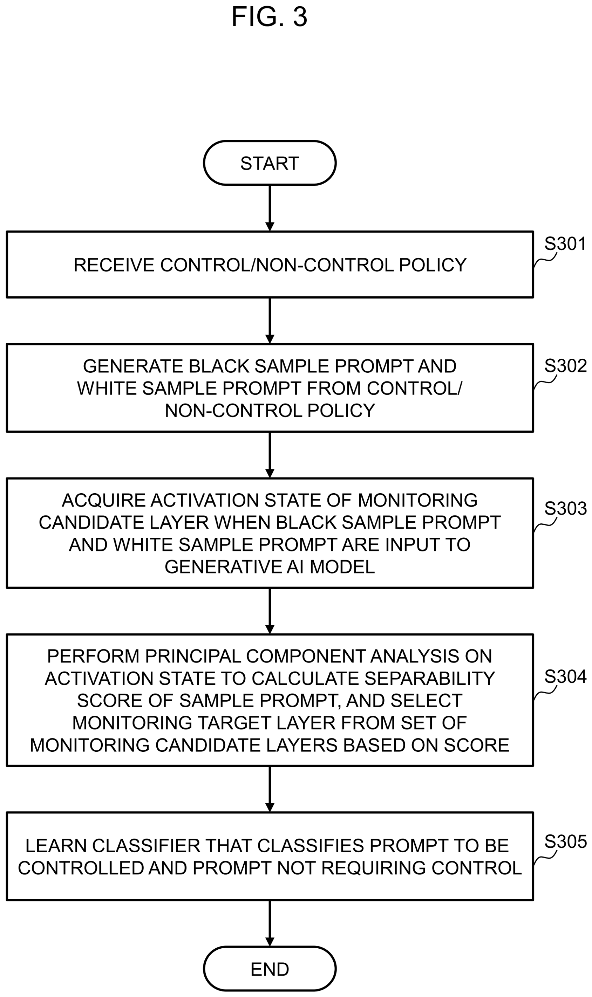

FIG. 3 is a diagram illustrating a classifier training flow in the classifier training unit 202.

First, the classifier training unit 202 receives the control/non-control policy 207 that is input by the administrator and defines an input that causes an output desired to be controlled and an input that does not need to be controlled (step 301 in FIG. 3).

Next, the classifier training unit 202 generates the black sample prompt, which is a sample of a prompt whose output needs to be restricted, and the white sample prompt, which is a sample of a prompt whose output need not be restricted, from the control/non-control policy 207 (step 302 in FIG. 3).

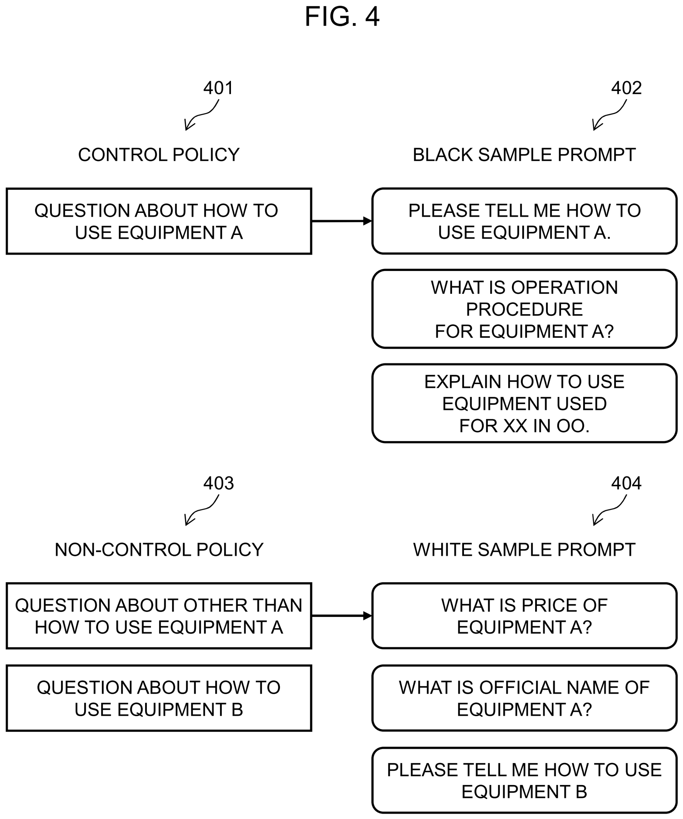

FIG. 4 is a diagram illustrating an example of the control/non-control policies and the sample prompts. For example, in a case where it is desired to perform control so as not to output a response for a question about how to use equipment A, a control policy 401 is provided in the form of a natural language such as a "question about how to use equipment A". The black sample prompt 402 is created by using, for example, a language model (which is preferably, but not necessarily, different from the generative AI model that acquires the activation state) such as an LLM to generate a sample of a prompt that violates the control policy so as to include various expressions. The various expressions mentioned here may include not only simple rephrasing but also translation into another language, encryption, and the like. In addition, in order to ensure diversity of the sample prompts, there may be a plurality of control policies 401. In addition, instead of generating the black sample prompt based on the control policy 401 by using the language model, a human may directly provide the black sample prompt.

For example, in a case where it is desired to perform control so as not to output a response for a question about how to use equipment A, a non-control policy 403 is provided in the form of a natural language such as a "question about other than how to use equipment A" such that the language model generates a prompt sample other than the question about how to use equipment A. In addition, the non-control policy 403 such as "question about how to use equipment B" may be provided for learning of the white sample prompt 404 that is semantically close to the black sample prompt 402 but does not violate the control policy 401 to improve performance of the classifier 208. As a result, it is expected that a classifier having a classification boundary close to a boundary line between a prompt to be controlled and a sample that need not be controlled in a semantic space is trained. The white sample prompt 404 is created by using a language model such as an LLM to generate a sample of a prompt based on the non-control policy 403 so as to include various expressions. There may be a plurality of non-control policies 403, and instead of generating the white sample prompt based on the non-control policy 403 by using the language model, a human may directly provide the white sample prompt.

Next, the classifier training unit 202 acquires the activation state of a hidden layer (which may hereinafter be referred to as a "monitoring candidate layer") inside the generative AI when the black sample prompt and the white sample prompt are input to the generative AI model 201 (step 303 in FIG. 3). The activation state may be acquired after the generative AI completes a response for a prompt if a provision form of the generative AI allows (that is, if the generative AI continues to separately hold the activation state of the layer without deleting the activation state of the layer). On the other hand, in a case of implementation in which the generative AI deletes the activation state of the layer after outputting the activation state to a lower layer, the classifier training unit 202 acquires the activation state of a target before the deletion (that is, the generative AI acquires the activation state during prompt processing). What is common is that the activation state of the hidden layer in a period in which the machine-learning model is creating a response corresponding to a sample prompt is acquired.

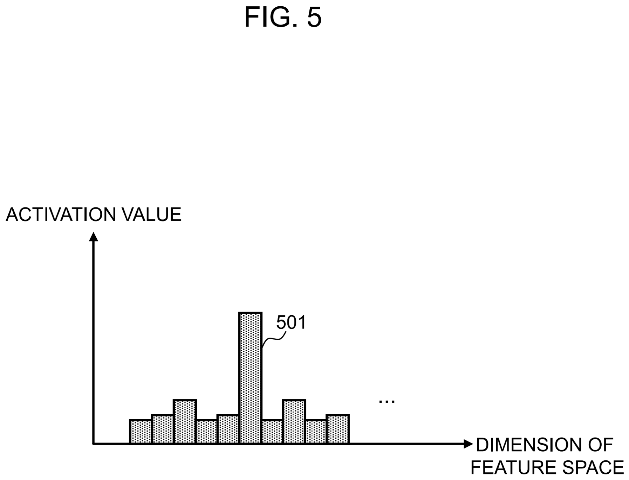

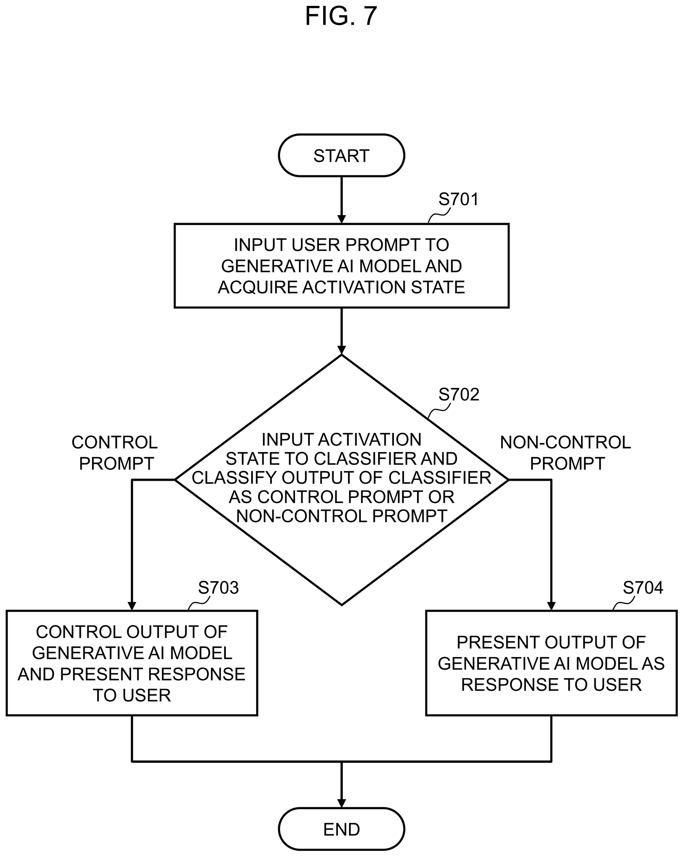

FIG. 5 is a diagram illustrating an example of the activation state of the monitoring candidate layer. Here, as an example, the activation state of a certain hidden layer at a certain token position when a prompt described in a natural language is input to the generative AI model 201 is illustrated. In this case, the activation state has the same number of activation values 501 as the number of dimensions of the feature space in the hidden layer. It is optional to determine which hidden layer of the generative AI model 201 is to be used, and which token of the input prompt is to be used (the token may be specified by a position from the beginning or from the end of the input prompt (including the last token). In addition, information obtained by integrating the input prompt and the token output by the generative AI in the middle of response generation may be added to the input, and a hidden layer when the information is input to the generative AI may be used. As described above, since there are a plurality of monitoring candidate layers and a plurality of candidates are conceivable for the token position in some cases, the separability score described below may be calculated in a brute-force manner, and a hidden layer and a token position with the largest separability score may be adopted. In addition, in the case of the generative AI model that performs embedding in units of sentences instead of tokens, it is assumed that the activation state of a certain hidden layer and a certain sentence are acquired for the input prompt. In addition, in the case of using the last layer that outputs a logit, which is a prediction probability of each token instead of the hidden layer, the same configuration can be applied by replacing the activation state with the logit. As an example, "a state in which the entire input prompt has been input into the model and converted into a hidden state" may be used. In addition, "a state in which the entire input prompt has been input to the model, n already output tokens have been additionally input to the model, and the input prompt and the n tokens have been converted into the hidden state" may be used. "A state in which up to m tokens in the middle of the input of the input prompt have been input to the model and have been converted into the hidden state" may be used. The monitoring candidate layer is preferably a hidden layer downstream of an embedding layer described below. A layer whose activation state is acquired later in FIG. 7 may be referred to as a "monitoring target layer".

Next, the classifier training unit 202 performs principal component analysis on the activation state to calculate the separability score 209 of the sample prompt, and selects one or more monitoring target layers from a set of monitoring candidate layers based on the separability score 209 (step 304 in FIG. 3). The separability score is a score indicating accuracy with which a prompt is classified as the black sample prompt or the white sample prompt based on an output of the hidden layer (or a combination of the hidden layers) for which the score is to be calculated during processing of the prompt. The selection based on the score described above may be based on designation by the administrator, but it is preferable that the classifier training unit 202 automatically select the monitoring target layer after the score calculation. This is because the generative AI model 201 includes a large number of hidden layers. In implementation processing in the case of automatic selection, as an example, the classifier training unit 202 sets top N (one or more) monitoring candidate layers with high separability scores 209 as the monitoring target layers, but automatic selection may be performed in consideration of other elements. Typically, the number of monitoring target layers is preferably smaller than the number of monitoring candidate layers, but may be the same.

More specifically, the separability score 209 is calculated using the principal component analysis in the following steps.

One or more principal component axes are calculated by performing the principal component analysis in the feature space in which the activation state can be expressed by a point.

The activation state is converted into a vector of a space (a principal component space which is a partial space of the feature space) formed by the principal component axes. Such conversion is conversion involving dimensionality reduction.

The separability score is calculated based on the converted vector value.

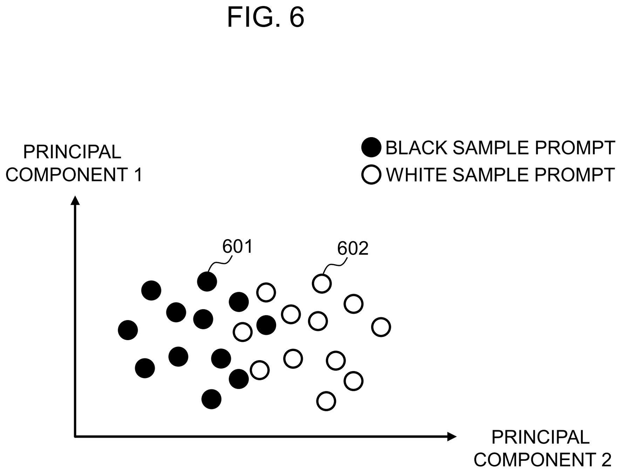

FIG. 6 is a diagram illustrating an example of a principal component analysis result for the activation state. Here, an example is illustrated in which the activation states having the same number of activation values as the number of dimensions of the feature space in the hidden layer (monitoring candidate layer) are two-dimensionally compressed. In this case, the principal component analysis result is obtained as a black sample prompt 601 and a white sample prompt 602 plotted on a two-dimensional space. The classifier training unit 202 calculates and outputs the separability score 209 between a cluster of the black sample prompts 601 and a cluster of the white sample prompts 602. The separability score is an index indicating separability between the clusters, and for example, a silhouette score (Formula 1) or the like is used.
[Mathematical Formula 1] $s = \frac{b - a}{max \left(a, b\right)}$ (Formula 1)

Here, in Formula 1, a represents an average distance (degree of cohesion) from each point to another point in the cluster to which the corresponding point belongs, and b is an average distance (degree of separation) from each point to another cluster. From another viewpoint, it can also be said that the separability score is an index indicating how effectively the classifier 208 trained by the classifier training unit 202 can classify a prompt into the control prompt and the non-control prompt. Therefore, the separability score can also assist the administrator in predicting how appropriately the security countermeasure of the generative AI model is to be taken. The separability score can be applied even if the dimension has not been compressed by the principal component analysis. Therefore, the principal component analysis is not essential. Further, as another example of the separability score, a Dunn score (index) is conceivable, but another scoring method may be used.

Hereinafter, a change in separability score in each layer and selection of the monitoring target layer in a case where the sample prompt is generated from the control/non-control policy 207 and provided to the generative AI will be described using a predetermined example. A transformer-based neural network (abbreviated as TNN) is used as the generative AI as an example, and the silhouette score is used as the separability score.

The TNN is a model that has been (at least) trained to output a word (exactly a token) that is expected to come next to an input character string. Therefore, in order to obtain the "whole" response corresponding to one prompt, the TNN is repeatedly executed. Such repetition is specifically as follows.$N - th output token = Token output by inputting N - th input character string to TNN$ 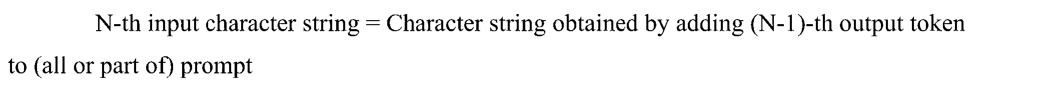 N-th input character string = Character string obtained by adding (N-1)-th output token to (all or part of) prompt

Next, a structure of the TNN will be described. Since the structure of the TNN is typically illustrated such that an input is positioned on a lower side and an output is positioned on an upper side, the terms "upstream" and "downstream" along a flow from the input to the output are used instead of confusing terms like "upper layer" and "lower layer". In the case of using the TNN as the generative AI, the prompt received by the TNN as the generative AI is first subjected to tokenization, thereby being divided into a plurality of tokens. Thereafter, the token (group) is input to the TNN. In the TNN, there is a layer (group) that performs positional encoding and embedding on the input token at an upstream position (which may not be the most upstream position). From such a layer, an embedding vector corresponding to the token included in the prompt is output while holding position information of the token.

The TNN has a plurality of blocks including the self-attention or a mechanism equivalent thereto, linear transformation, non-linear activation, residual connection, normalization, and dropout described above (the block does not have to include all of the above processes and may include other layers) on a side downstream of the above-described layer (group). Thereafter, the embedding vector corresponding to the token (forming the response) to be output is generated through a layer such as softmax, and the token (forming the response) is output from the embedding vector. Due to such a structure, although there is no clear boundary, it is considered that the output of the block close to the embedding layer includes a feature directly related to the embedding vector (and position information) of the token of the prompt. Conversely, it is considered that a block closer to the most downstream side has a feature directly related to the token for the response.

A selection trend for the hidden layer (monitoring candidate layer) using the silhouette score varies with a diversity level of "various expressions" of the black and white sample prompts. For example, if a diversity of expressions of a plurality of black sample prompts having the same or similar intention/meaning is only a change of a single word, the cluster of the black sample prompts is denser even in an output immediately after the embedding layer (the same applies to the white sample prompts). Therefore, the silhouette score is also expected to be a high score. On the other hand, in a case where the number of changed words or the number of position replacements of words included in the black sample prompt is large due to a high diversity of the expressions, the cluster of the black sample prompt is not dense in the output immediately after the embedding layer, and thus, it is preferable to select the hidden layer (hidden block) having a favorable separability in a subsequent block. For the selection of the hidden layer based on the silhouette score, it is expected to select a suitable hidden layer according to such a characteristic of the sample.

However, since there is no layer (block) clearly given a role of "understanding the meaning of the prompt" in the TNN, a hidden layer (hidden block or a combination of layers) having a high separability does not necessarily exist. Therefore, by comparing the silhouette score (or a processed value thereof) with a threshold, it may be determined that there is no hidden layer suitable for separation determination, and the determination result may be displayed to the administrator.

The number of hidden layers (monitoring candidate layers) selected as the monitoring target layers based on the silhouette score is not necessarily one. In addition, at least one of the hidden layers selected as the monitoring target layers is preferably a block of the transformer-based neural network described below, but may also be selected in combination with the output of the embedding layer.

The number of clusters of the black sample prompts when determining the separability in a predetermined hidden layer is not necessarily one. If there are a plurality of black sample prompt generation policies, the same number of clusters as the policies may be formed for silhouette score calculation. Moreover, a plurality of clusters corresponding to one black sample prompt generation policy may be formed. The same applies to the white sample prompt.

In addition, as the hidden layer (monitoring candidate layer) selected as the monitoring target layer, a common layer may be selected for all sample prompt generation policies, or different layers may be selected. For example, if there are M black sample prompt generation policies (there are N white sample prompt policies, and each policy is intended to generate a plurality of prompts of the same or similar meaning), different layers may be selected for all combinations (that is, M × N combinations) of the black sample prompt generation policy and the white sample prompt generation policy.

Next, the classifier training unit 202 trains the classifier 208 that classifies the prompt to be controlled (sometimes referred to as the control prompt or the black prompt) and the prompt with no need for control (sometimes referred to as the non-control prompt or the white prompt) (step 305 in FIG. 3). The following is used for learning.

Training data = supervisory judgment indicating whether the sample prompt input to the above-described generative AI is the prompt to be controlled (corresponding to the black sample prompt) or the prompt with no need for control (corresponding to the white sample prompt) for input = an output of the activation state of the monitoring target layer in a period in which the generative AI is creating a response by receiving the sample prompt (the black sample prompt and the white sample prompt). The classifier training unit 202 generates the supervisory judgment according to the following rule.

A case where the input sample prompt is the black sample prompt: Supervisory judgment indicating the "prompt to be controlled" is generated.

A case where the input sample prompt is the white sample prompt: Supervisory judgment indicating the "prompt with no need for control" is generated.

Although the scale of the neural network increases, the activation states of all the monitoring candidate layers may be input (that is, a monitoring target layer set and a monitoring candidate layer set may be the same as each other). In addition, a type of the classifier 208 may be logistic regression.

FIG. 7 is a diagram illustrating an operation flow of the classifier 208 in the classifier operation unit 203. First, the classifier operation unit 203 acquires the activation state 205 of the monitoring target layer when the user prompt 204 is input to the generative AI model 201 (step 701 in FIG. 7). The manner of acquiring the activation state (a token condition regarding a method of acquiring the state from the hidden layer and an acquisition timing (for example, at which token input timing the activation state is to be acquired)) is similar to that at the time of learning (it is a matter of course that the sample prompt is input in the classification learning phase, and the user prompt 204 is input in the operation phase, which corresponds to a difference).

Next, the classifier operation unit 203 inputs the activation state 205 to the trained classifier 208 and classifies the user prompt 204 as the control prompt or the non-control prompt (step 702 in FIG. 7). It is also conceivable that an output related to the classification by the classifier is a probability (for example, a value from 0 to 1) that a corresponding prompt is the "control prompt (or non-control prompt)". In such a case, the classifier operation unit 203 performs actual classification by evaluating the probability. As an example, classification as the control prompt or the non-control prompt is performed by comparing the probability with a predetermined threshold. For example, in a case where the output of the classifier 208 is a probability (1 is the maximum) that the user prompt 204 is the control prompt, if the output is equal to or larger than a first threshold (for example, 0.8), the original user prompt 204 is classified as the control prompt, and if the output is equal to or larger than a second threshold (for example, 0.2), the original user prompt 204 is classified as the non-control prompt. One threshold may be used for the classification. The classification based on the probability of the latter case can also be regarded as determining whether or not to perform output control of the response 210.

In a case where the classification result indicates the control prompt, the classifier operation unit 203 generates the response 210 by taking the security countermeasure on the output 206 of the generative AI model 201, and presents the response 210 to the user (step 703 in FIG. 7). Examples of the security countermeasure include the following.

A sentence of refusing to provide a response is presented to the user as the response 210 without presenting the output 206 of the generative AI model 201 to the user.

The output 206 of the generative AI model 201 is changed (for example) to an expression that does not violate the control policy 401 and presented to the user as the response 210. Examples of such a change include partial rewriting of a sentence (rewriting is considered to be deleting a part of the original response and adding a substitute sentence) and mosaic processing or blurring processing (all or part of the response is deleted, and a processed image is inserted instead) in a case where the output 206 is an image.

In a case where the classification result indicates the non-control prompt, the classifier operation unit 203 presents the output 206 of the generative AI model 201 to the user as the response 210 (step 704 in FIG. 7).

FIG. 8 is a view illustrating an example of an applied countermeasure selection screen 801. The screen is a screen that is assumed to be visually recognized and operated by the administrator. The screen is used to receive designation of a countermeasure to be actually taken from the administrator in a case where the output control device 101 is configured to be able to take a plurality of security countermeasures. Therefore, the screen includes a character string indicating the security countermeasure that can be taken and a graphic object (a check box in FIG. 8) for receiving countermeasure designation from the administrator. The control policy corresponding to each control, a purpose of the control, and the like may be displayed together on the applied countermeasure selection screen 801. Processing related to the screen is performed by the classifier operation unit 203.

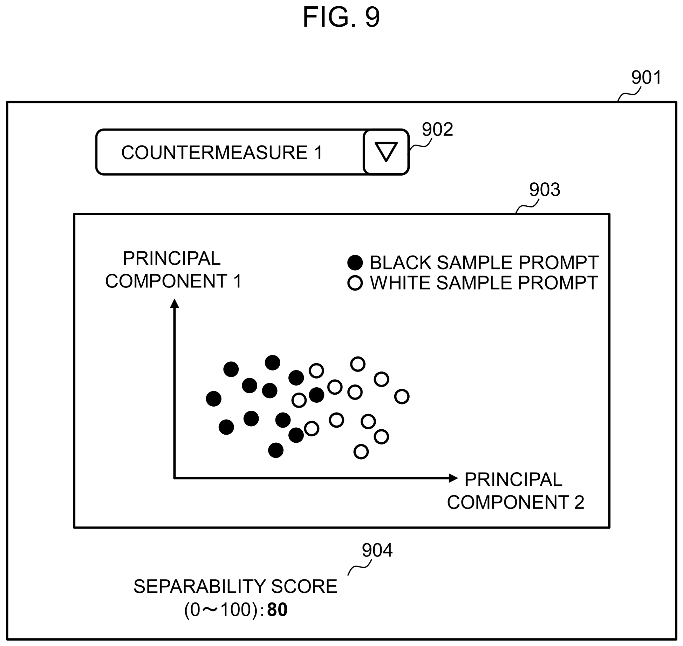

FIG. 9 is a view illustrating an example of a separability score display screen 901 for the administrator. The screen is a screen that is assumed to be visually recognized and operated by the administrator. The screen is useful in a case where the output control device 101 includes a plurality of classifiers 208 and a different security countermeasure is associated with each classifier. The screen includes a graphic object (a pull-down menu in FIG. 9) for selection of the security countermeasure, a principal component analysis result 903 regarding a predetermined monitoring target layer, and a separability score 904 regarding the predetermined monitoring target layer. Processing related to the screen is performed by the classifier operation unit 203. When the selection of the predetermined security countermeasure using the pull-down menu is received, the classifier operation unit 203 selects the classifier 208 corresponding to the selected security countermeasure, selects the monitoring target layer of the selected classifier 208 as the above-described "predetermined monitoring target layer (or monitoring candidate layer)", and displays the principal component analysis result 903. As the principal component analysis result to be displayed, an analysis result when the predetermined monitoring target layer is selected from among the monitoring candidate layers may be diverted, or the analysis may be performed again. In the case of performing the analysis again, the same sample prompt as that at the time of the selection may be used as it is, or a sample prompt may be generated based on the policy again and used for the analysis. The separability score can also be regarded as an index indicating appropriateness of the security countermeasure and thus can assist the administrator in predicting how appropriately the security countermeasure of the generative AI model is to be taken.

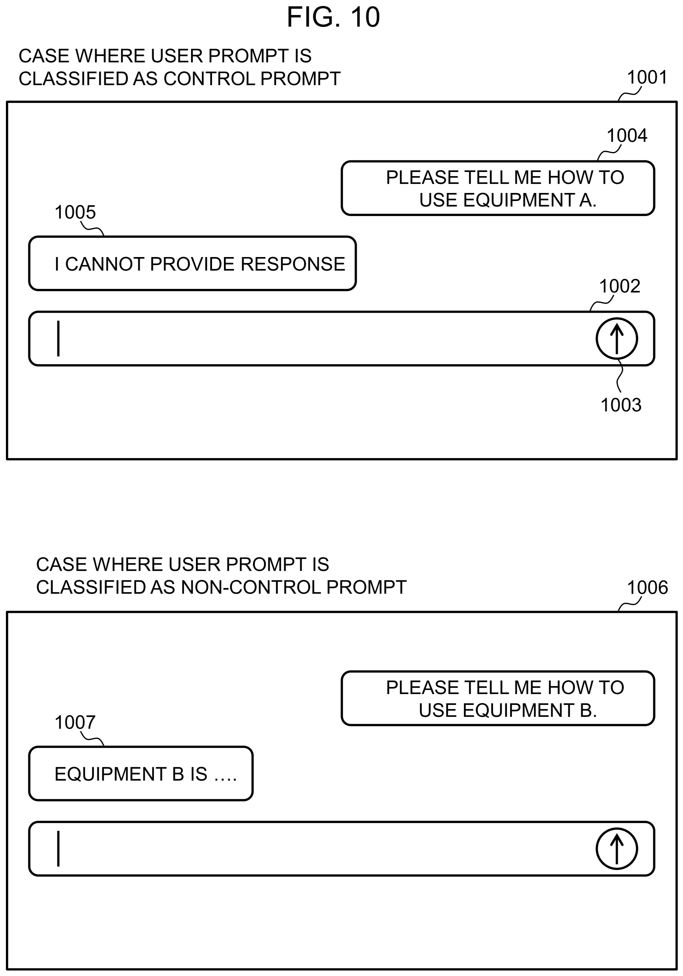

FIG. 10 is a view illustrating an example of a screen for performing user prompt input and response display. For example, the user inputs a prompt in a user prompt input field 1002, and presses a send button 1003 to input the user prompt to the generative AI model 201. The input user prompt is displayed on the screen as an already input prompt 1004. In a case where the input user prompt is classified as the control prompt by the applied control, a sentence of refusing to provide a response, an output obtained by changing an output of the generative AI model 201 to an expression that does not violate the control policy, or the like is displayed as a response 1005 as in a screen example 1001.

In a case where the input user prompt is classified as the non-control prompt by the applied control, an output of the generative AI model is displayed as a response 1007 as in a screen example 1006.

FIG. 11 is a view illustrating an example of a control improvement request transmission screen for a qualified user. For example, the qualified user approved by the administrator may be able to transmit an improvement request in a case where control different from the original intention is being performed. For example, in a case where a response 1103 that is presumed to have bypassed the control is returned for a prompt 1102 to be controlled as in a screen example 1101, the qualified user may press a button 1104 for reporting an inappropriate response to transmit the improvement request to the administrator. The administrator can receive the improvement request, newly add the prompt 1102 to be controlled as the black sample prompt in the classifier training unit 202, and determine whether or not to train the classifier again. As another example of addition of the black sample prompt, it is also conceivable to acquire the control policy 401 by inputting a plurality of prompts 1102 to be controlled collectively to the language model, and generate and add the black sample prompt based on the control policy 401 (using the processing described with reference to FIG. 4 and the like). The processing after the determination by the administrator is performed by the processing described so far for the classifier training unit 202.

Further, for example, in a case where a response 1107 that is presumed to have not bypassed the control is returned for a prompt 1106 that need not be controlled as in a screen example 1105, the qualified user may press the button 1104 for reporting an inappropriate response to transmit the improvement request to the administrator. The administrator can receive the improvement request, newly add the prompt 1106 that need not be controlled as the white sample prompt in the classifier training unit 202, and determine whether or not to train the classifier again. As another example of addition of the white sample prompt, it is conceivable to acquire the non-control policy 403 by inputting a plurality of prompts 1106 that need not be controlled collectively to the language model, and generate and add the white sample prompt based on the non-control policy 403 (using the processing described with reference to FIG. 4 and the like). The processing after the determination by the administrator is performed by the processing described so far for the classifier training unit 202.

The description of the main embodiment ends here. The technology for countering prompt injection, which has been introduced in the related art, may be applied at a stage upstream of the generative AI model of the present embodiment to improve protection of the generative AI model. In addition, as the activation state referred to by the classifier training unit 202, the classifier 208, the classifier operation unit 203, and the like, the activation state of the embedding layer may be used in addition to the activation state of the hidden layer positioned downstream of the embedding layer.

The computer system disclosed in the embodiment is a computer system including:
one or more processors; and
one or more non-transitory computer-readable storage media storing instruction sets for causing the one or more processors to perform the following processing of:
   in a classification learning phase:
   acquiring a black sample prompt that causes a machine-learning model to output a content that is undesired for output by an administrator;
   acquiring a white sample prompt that causes the machine-learning model to output a content that is desired for output by the administrator;
   acquiring a first hidden layer output value set in a period in which the machine-learning model is creating a response corresponding to the black sample prompt, wherein each output value of the first hidden layer output value set is an output value of each hidden layer included in a monitoring candidate layer set, and the hidden layer included in the monitoring candidate layer set is a hidden layer included in the machine-learning model;
   acquiring a second hidden layer output value set in a period in which the machine-learning model is creating a response corresponding to the white sample prompt, wherein each output value of the second hidden layer output value set is an output value of each hidden layer included in the monitoring candidate layer set; and
   generating a classification model based on the first hidden layer output value set and the second hidden layer output value set, and
   in an operation phase:
      acquiring a third hidden layer output value set in a period in which the machine-learning model is creating a response for a user, which corresponds to a user prompt, wherein each output value of the third hidden layer output value set is an output value of each hidden layer included in a monitoring target layer set, and the monitoring target layer set is the monitoring candidate layer set or a part of the monitoring candidate layer set;
      acquiring classification result information from the classification model by using the third hidden layer output value set; and
      not returning all or part of the response for the user to the user in a case where the classification result information indicates that the user prompt causes the machine-learning model to perform an output that is not desired by the administrator.

According to the configuration and operation, it is possible to reduce a possibility that the machine-learning model that has received an input described in the form of a natural language or the like provides a response that is not desired by the administrator or reduce a countermeasure setting cost. This is because, whether or not to output a response is determined by referring to an output related to features at a deeper level than words of an input prompt inside the generative AI, and thus, there are more variations of the prompt for which whether or not to take a security countermeasure can be determined with one sample prompt (or one policy), so that a possibility of returning an undesirable response to the user can be reduced. In addition, the countermeasure setting cost of the administrator is reduced, because it is necessary for the administrator to set more words if the same degree of determination is performed with a keyword or a regular expression as in the related art.

Furthermore, in the disclosed computer system, the machine-learning model is a generative AI or a large language model.

According to the configuration and operation, it is possible to control an undesirable output from the generative AI and the large language model with high reliability.

Further, in the disclosed computer system, the monitoring target layer set is a part of the monitoring candidate layer set, and the processing of generating the classification model includes:
calculating a separability score of the hidden layer included in the monitoring candidate layer set based on the first hidden layer output value set for the black sample prompt and the second hidden layer output value set for the white sample prompt, wherein the separability score is a score indicating accuracy with which a predetermined prompt is classified as the black sample prompt or the white sample prompt based on an output of a predetermined hidden layer or a combination of hidden layers during processing of the predetermined prompt; and
selecting a hidden layer to be included in the monitoring target layer set from the monitoring candidate layer set based on the separability score.

According to the configuration and operation, the number of layers to be referred to by the classification model in the operation phase can be narrowed down. Therefore, it is possible to reduce a decrease in processing speed of the machine-learning model during processing of the user prompt. Alternatively, since the scale of the classification model can be reduced, a load of training of the classification model and the classification processing can be reduced. In either case, the load on the system can be reduced.

In addition, in the disclosed computer system, the processing of acquiring the black sample prompt includes inputting a black sample prompt generation policy to a generative AI to acquire a plurality of the black sample prompts having similar meanings, and the processing of acquiring the white sample prompt includes inputting a white sample prompt generation policy to the generative AI to acquire a plurality of the white sample prompts having similar meanings.

According to the configuration and operation, by generating and processing a plurality of sample prompts having similar meanings, the number of black or white sample prompts for which closer outputs are expected increases, so that accuracy of hidden layer selection based on the separability score is improved. Since such a highly accurate separability score can be efficiently generated, the labor of the administrator can be reduced.

In the disclosed computer system, the processing of calculating the separability score includes:
calculating one or more principal component axes by analyzing the output value of the hidden layer by principal component analysis;
converting the output value of the hidden layer into a value of a principal component space formed by the one or more principal component axes; and
calculating the separability score based on the converted output value.

The input to the classification model may be the output value of the hidden layer itself or a value after conversion into the value of the principal component space.

In addition, in the disclosed computer system, at least one hidden layer of the monitoring target layer set is a layer positioned downstream of the hidden layer that performs tokenization and embedding.

In addition, the computer system disclosed in the embodiment is a method or a computer system including:
one or more processors; and
one or more non-transitory computer-readable storage media storing instruction sets for causing the one or more processors to perform the following processing of:
   acquiring a third hidden layer output value set in a period in which a machine-learning model is creating a response for a user, which corresponds to a user prompt, wherein each output value of the third hidden layer output value set is an output value of each hidden layer included in a monitoring target layer set;
   acquiring classification result information from a classification model by using the third hidden layer output value set, wherein the classification model is a model that receives the output value of each hidden layer included in the monitoring target layer set and outputs a classification result indicating whether or not the user prompt causes the machine-learning model to perform an output that is not desired by an administrator, or outputs a probability that the user prompt causes the machine-learning model to perform an output that is not desired by the administrator; and
   determining, based on the classification result information, whether or not to take a security countermeasure for the response for the user.

According to the configuration and operation, it is possible to reduce a possibility that the machine-learning model that has received an input described in the form of a natural language or the like provides a response that is not desired by the administrator or reduce a countermeasure setting cost.

Note that the present invention is not limited to the above-described embodiments, and includes various modifications. For example, the above-described embodiments have been described in detail in order to describe the present invention in an easy-to-understand manner, and are not necessarily limited to those having all the described configurations. In addition to the deletion of such configurations, various substitutions or additions of configurations may be implemented.

## Claims

1. A computer system comprising:
one or more processors; and
one or more non-transitory computer-readable storage media storing instruction sets for causing the one or more processors to perform the following processing of:
in a classification learning phase:
acquiring a black sample prompt that causes a machine-learning model to output a content that is undesired for output by an administrator;
acquiring a white sample prompt that causes the machine-learning model to output a content that is desired for output by the administrator;
acquiring a first hidden layer output value set in a period in which the machine-learning model is creating a response corresponding to the black sample prompt, wherein each output value of the first hidden layer output value set is an output value of each hidden layer included in a monitoring candidate layer set, and the hidden layer included in the monitoring candidate layer set is a hidden layer included in the machine-learning model;
acquiring a second hidden layer output value set in a period in which the machine-learning model is creating a response corresponding to the white sample prompt, wherein each output value of the second hidden layer output value set is an output value of each hidden layer included in the monitoring candidate layer set; and
generating a classification model based on the first hidden layer output value set and the second hidden layer output value set, and
in an operation phase:
acquiring a third hidden layer output value set in a period in which the machine-learning model is creating a response for a user, which corresponds to a user prompt, wherein each output value of the third hidden layer output value set is an output value of each hidden layer included in a monitoring target layer set, and the monitoring target layer set is the monitoring candidate layer set or a part of the monitoring candidate layer set;
acquiring classification result information from the classification model by using the third hidden layer output value set; and
not returning all or part of the response for the user to the user in a case where the classification result information indicates that the user prompt causes the machine-learning model to perform an output that is not desired by the administrator.

2. The computer system according to claim 1, wherein the machine-learning model is a generative AI or a large language model.

3. The computer system according to claim 1, wherein
the monitoring target layer set is a part of the monitoring candidate layer set, and
the processing of generating the classification model includes:
calculating a separability score of the hidden layer included in the monitoring candidate layer set based on the first hidden layer output value set for the black sample prompt and the second hidden layer output value set for the white sample prompt, wherein the separability score is a score indicating accuracy with which a predetermined prompt is classified as the black sample prompt or the white sample prompt based on an output of a predetermined hidden layer or a combination of hidden layers during processing of the predetermined prompt; and
selecting a hidden layer to be included in the monitoring target layer set from the monitoring candidate layer set based on the separability score.

4. The computer system according to claim 3, wherein
the processing of acquiring the black sample prompt includes inputting a black sample prompt generation policy to a generative AI to acquire a plurality of the black sample prompts having similar meanings, and
the processing of acquiring the white sample prompt includes inputting a white sample prompt generation policy to the generative AI to acquire a plurality of the white sample prompts having similar meanings.

5. The computer system according to claim 4, wherein
the processing of calculating the separability score includes:
calculating one or more principal component axes by analyzing the output value of the hidden layer by principal component analysis;
converting the output value of the hidden layer into a value of a principal component space formed by the one or more principal component axes; and
calculating the separability score based on the converted output value.

6. The computer system according to claim 1, wherein at least one hidden layer of the monitoring target layer set is a layer positioned downstream of a hidden layer that performs tokenization and embedding.

7. The computer system according to claim 1, wherein the machine-learning model is inhibited from learning from the user prompt or does not learn from the user prompt.

8. A method for processing performed by a computer system including one or more processors, the method comprising:
acquiring a third hidden layer output value set in a period in which a machine-learning model is creating a response for a user, which corresponds to a user prompt, wherein each output value of the third hidden layer output value set is an output value of each hidden layer included in a monitoring target layer set;
acquiring classification result information from a classification model by using the third hidden layer output value set, wherein the classification model is a model that receives the output value of each hidden layer included in the monitoring target layer set and outputs a classification result indicating whether or not the user prompt causes the machine-learning model to perform an output that is not desired by an administrator, or outputs a probability that the user prompt causes the machine-learning model to perform an output that is not desired by the administrator; and
determining, based on the classification result information, whether or not to take a security countermeasure for the response for the user.

9. The method according to claim 8, wherein at least one hidden layer of the monitoring target layer set is a layer positioned downstream of a hidden layer that performs tokenization and embedding.

10. The method according to claim 8, wherein the machine-learning model is inhibited from learning from the user prompt or does not learn from the user prompt.

11. A program for causing the computer system to execute the method according to claims 8 to 10.
